# EUROPÄISCHE PATENTANMELDUNG

(11) **EP 1 603 054 A1**
(43) Veröffentlichungstag der Anmeldung: **07.12.2005**
(21) Anmeldenummer: 04013435.5
(22) Anmeldetag: 04.06.2004
(51) Int. Cl.: G06F 17/30

(54) **Verfahren und Vorrichtung zum bestimmen von charakteristischen Eigenschaften eines individuellen Kraftfahrzeugs**

(71) Anmelder: DAT Deutsche Automobil Treuhand GmbH, 73760 Ostfildern-Scharnhausen (DE)
(72) Erfinder: Hofmann, Michael, 70569 Stuttgart (DE); Friess, Hans-Dieter, 73340 Amstetten (DE); Kukofka, Dirk-Achim, 70794 Filderstadt (DE); Maurer, Werner, 70599 Stuttgart (DE)
(74) Vertreter: Duhme, Torsten

(57) **Zusammenfassung**

Zum Bestimmen von charakteristischen Eigenschaften eines individuellen Kraftfahrzeugs (28) aus einer Vielzahl von möglichen Kraftfahrzeugen (50) wird eine Datenbank (16) bereitgestellt, in der für eine Vielzahl von Gruppen (22) von jeweils typgleichen Kraftfahrzeugen charakteristische Eigenschaften hinterlegt sind. Jeder Gruppe (22) ist ein Gruppenkennzeichen (24) eindeutig zugewiesen. Dem individuellen Kraftfahrzeug (28) ist ein Kraftfahrzeugidentifikationsschlüssel (26) zugeordnet. Die charakteristischen Eigenschaften werden mit Hilfe des Kraftfahrzeugidentifikationsschlüssels (26) aus der Datenbank abgefragt. Gemäß einem Aspekt der Erfindung variiert der Kraftfahrzeugidentifikationsschlüssel (26) in Abhängigkeit von einer Karosseriebauform, einer Motorvariante (34) und einer Getriebevariante (36) des individuellen Kraftfahrzeugs (28). Ferner sind die charakteristischen Eigenschaften jeweils zu Gruppen (22) von Kraftfahrzeugen hinterlegt, die in Bezug auf Kraftfahrzeugart, Kraftfahrzeughersteller, Kraftfahrzeugbaureihe sowie in Bezug auf Karosseriebauform, Motorvariante und Getriebevariante jeweils gleich sind.

## Beschreibung

Die vorliegende Erfindung betrifft ein Verfahren zum Bestimmen von charakteristischen Eigenschaften eines individuellen Kraftfahrzeugs, das aus einer Vielzahl von möglichen Kraftfahrzeugen ausgewählt wird, mit den Schritten:
- Bereitstellen einer, vorzugsweise elektronischen, Datenbank, in der für eine Vielzahl von Gruppen von jeweils typgleichen Kraftfahrzeugen charakteristische Eigenschaften hinterlegt sind,
- Bereitstellen einer Vielzahl von Gruppenkennzeichen, wobei jeder Gruppe in der Datenbank ein Gruppenkennzeichen eindeutig zugewiesen ist,
- Zuordnen eines bestimmten Kraftfahrzeugidentifikationsschlüssels zu dem individuellen Kraftfahrzeug, und
- Abfragen der charakteristischen Eigenschaften, die in der Datenbank zu derjenigen Gruppe hinterlegt sind, deren Gruppenkennzeichen dem Kraftfahrzeugidentifikationsschlüssel entspricht.

Die Erfindung betrifft ferner eine entsprechende Vorrichtung, mit:
- einem ersten Speicher, in dem eine vorzugsweise elektronische Datenbank abgespeichert ist, in der für eine Vielzahl von Gruppen von jeweils typgleichen Kraftfahrzeugen charakteristische Eigenschaften hinterlegt sind, wobei jeder Gruppe in der Datenbank ein Gruppenkennzeichen eindeutig zugewiesen ist,
- einem Eingabemedium zum Eingeben eines bestimmten Kraftfahrzeugidentifikationsschlüssels, der einem individuellen Kraftfahrzeug zugeordnet ist, und
- einem Ausgabemedium, das die charakteristischen Eigenschaften anzeigt, die in der Datenbank zu derjenigen Gruppe hinterlegt sind, deren Gruppenkennzeichen dem Kraftfahrzeugidentifikationsschlüssel entspricht.

Ein solches Verfahren und eine solche Vorrichtung sind beispielsweise von einem Internetangebot der vorliegenden Anmelderin bekannt, das die Bestimmung eines Gebrauchtfahrzeugwertes ermöglicht. Dieses Internetangebot kann auf den Internetseiten der Anmelderin unter *http:llwww.dat.de* abgefragt werden. Die vorliegende Erfindung ist jedoch nicht auf die Ermittlung von Gebrauchtfahrzeugwerten oder anderen betriebswirtschaftlichen Eigenschaften von Kraftfahrzeugen beschränkt. Sie ist gleichermaßen zur Bestimmung von technischen Eigenschaften von Kraftfahrzeugen vorgesehen, wie beispielsweise einer Ersatzteilkompatibilität zwischen Kraftfahrzeugen unterschiedlicher Baureihen oder sogar unterschiedlicher Kraftfahrzeughersteller.

Zur Bestimmung von charakteristischen Eigenschaften eines Kraftfahrzeugs ist es somit bekannt, Datenbanken bereitzustellen, in denen die charakteristischen Eigenschaften für das Kraftfahrzeug hinterlegt sind. Eine Schwierigkeit besteht darin, dass durch technische Rahmenbedingungen, wie maximal zur Verfügung stehender Speicherplatz und Verarbeitungsgeschwindigkeit des zur Datenbankabfrage verwendeten Rechners, der in einer solchen Datenbank zu hinterlegende Detaillierungsgrad begrenzt ist. Die ungeheure Anzahl an Kraftfahrzeugmodellen und -varianten würde bei einer hohen Detailtiefe der in der Datenbank hinterlegten Eigenschaften mit handelsüblichen Rechnern zu inakzeptabel langen Such- und Verarbeitungszeiten führen. Außerdem wird der Datenumfang bei einer hohen Detailtiefe so hoch, dass die Anforderungen an den benötigten Speicherplatz den praktischen Nutzen übersteigen können. Infolgedessen sind die bislang bekannten Datenbanken hinsichtlich ihres Detaillierungsgrades auf den jeweiligen Anwendungszweck zugeschnitten, d.h. sie enthalten letztlich nur die für einen Anwendungszweck benötigten charakteristischen Eigenschaften.

Beispielsweise erlaubt die eingangs beschriebene Vorrichtung der vorliegenden Anmelderin eine grobe Abschätzung des Gebrauchtwagenwertes. Eine Prüfung auf Ersatzteilkompatibilität oder eine Kalkulation von Reparaturkosten sind mit dieser bekannten Vorrichtung jedoch nicht möglich. Für derartige Anwendungen werden andere, jeweils speziell erstellte Datenbanken angeboten, die allerdings nur geschlossenen Benutzergruppen zugänglich sind.

Es gibt jedoch zahlreiche Anwendungsfälle, in denen unterschiedliche Eigenschaften eines individuellen Kraftfahrzeugs bestimmt werden müssen, beispielsweise nach einem Unfall. In einem solchen Fall muss der Kraftfahrzeugreparaturbetrieb eine Reparaturkostenkalkulation durchführen und das Ergebnis dem aktuellen Gebrauchtwagenwert gegenüberstellen, um entscheiden zu können, ob wirtschaftlich ein Totalschaden vorliegt. Des Weiteren muss geprüft werden, ob benötigte Ersatzteile vorrätig sind. Derartige Ersatzteile sind typischerweise anhand von Ersatzteilnummern identifizierbar, die jedoch nach Kraftfahrzeughersteller und -baureihe variieren. In der Praxis sind viele Ersatzteile jedoch hersteller- und modellübergreifend verwendbar. Bei einer Suche unter den Ersatzteilnummern kann es daher vorkommen, dass ein technisch an sich geeignetes Ersatzteil im Lager des Reparaturbetriebes vorhanden ist, dass dieses Ersatzteil jedoch nicht gefunden wird, weil es von seiner Ersatzteilnummer her einer anderen Kraftfahrzeugbaureihe zugeordnet ist. Hier ist es wünschenswert, eine Datenbank zur Verfügung zu haben, die sämtliche Informationen leicht zugänglich liefert.

Die hohen Anforderungen an die Speicher- und Verarbeitungskapazität und die daraus folgende Reduzierung der Detailtiefe bei den bislang bekannten Vorrichtungen haben ferner den Nachteil, dass die Bestimmung der charakteristischen Eigenschaften nur mit einer großen Unsicherheit behaftet ist, also relativ unpräzise ist. Um die charakteristischen Eigenschaften eines individuellen Kraftfahrzeugs mit einer höheren Genauigkeit bestimmen zu können, ist ein höherer Detaillierungsgrad erforderlich, was jedoch aufgrund der ungeheuren Vielzahl von in Betracht kommenden Kraftfahrzeugen die Anforderungen an Speicher- und Verarbeitungskapazität kommerziell eingesetzter Personal Computer übersteigt.

Vor diesem Hintergrund ist es eine Aufgabe der vorliegenden Erfindung, ein Verfahren und eine Vorrichtung der eingangs genannten Art anzugeben, die mit einem geringen technischen Aufwand eine präzisere und anwendungsübergreifende Bestimmung von charakteristischen Eigenschaften eines individuellen Kraftfahrzeugs ermöglichen. Es ist insbesondere Aufgabe der vorliegenden Erfindung, ein Verfahren und eine Vorrichtung der eingangs genannten Art anzugeben, die eine Bestimmung von charakteristischen Eigenschaften für eine unbegrenzte Vielzahl von Kraftfahrzeugmodellen mit handelsüblichen Personal Computern ermöglicht.

Diese Aufgabe wird gemäß einem Aspekt der vorliegenden Erfindung durch ein Verfahren und eine Vorrichtung der eingangs genannten Art gelöst, bei denen der Kraftfahrzeugidentifikationsschlüssel in Abhängigkeit von einer Karosseriebauform, einer Motorvariante und einer Getriebevariante des individuellen Kraftfahrzeugs variiert und bei dem die charakteristischen Eigenschaften jeweils zu Gruppen von Kraftfahrzeugen hinterlegt sind, die in Bezug auf Kraftfahrzeugart, Kraftfahrzeughersteller, eine Kraftfahrzeugbaureihe, sowie in Bezug auf Karosseriebauform, Motorvariante und Getriebevariante jeweils gleich sind.

Die Verwendung von Kraftfahrzeugschlüsseln zum Abfragen von charakteristischen Eigenschaften, die in einer Datenbank hinterlegt sind, ist für sich genommen bekannt. Beispielsweise wird hierzu in Deutschland der so genannte KBA-Schlüssel des Deutschen Kraftfahrtbundesamtes verwendet. Alle bekannten Kraftfahrzeugidentifikationsschlüssel sind jedoch zu unspezifisch, um eine anwendungsübergreifende Identifizierung eines individuellen Kraftfahrzeugs zu ermöglichen. Beispielsweise unterscheidet der KBA-Schlüssel in der Regel nicht zwischen 2-und 4-türigen Modellvarianten eines Kraftfahrzeugs einer Baureihe, was jedoch sowohl für eine mögliche Reparatur als auch für die Ersatzteilbeschaffung von Bedeutung ist.

Neben dem KBA-Schlüssel gibt es für jedes einzelne Kraftfahrzeug eine vom Hersteller vergebene Kraftfahrzeugidentifikationsnummer. Diese ist hinsichtlich ihres Detaillierungsgrades jedoch zu speziell, und deren Verwendung würde aufgrund der übergroßen Informationsdichte die Speicher- und Verarbeitungskapazität handelsüblicher Rechner übersteigen.

Die vorliegende Erfindung beruht dementsprechend auf der Verwendung eines neuen Kraftfahrzeugidentifikationsschlüssels, der einen optimalen Detaillierungsgrad bietet, welcher aus wesentlichen technischen Kenngrößen eines Kraftfahrzeugs abgeleitet ist. Aufgrund des neuen Schlüssels lassen sich die charakteristischen Eigenschaften der Vielzahl von möglichen Kraftfahrzeugen auf optimale Weise gruppieren. Die erforderliche Speicherkapazität wird reduziert, indem auf die oben genannten Gruppierungsmerkmale abgestellt wird.

Die Konzentration auf Karosseriebauform (dies beinhaltet bei Lkw den sogenannten Aufbau und/oder das Fahrerhaus), Motorvariante und Getriebevariante in Ergänzung zu allgemeinen Kriterien wie Kraftfahrzeughersteller, Kraftfahrzeugart (Pkw, Lkw, Motorrad, Kleinlaster u.a.) und Kraftfahrzeugbaureihe (E Klasse, Golf u.a.) ermöglicht eine optimale Gruppierung. (Bei Lkw wird in bevorzugten Ausführungen der Erfindung zusätzlich noch der Radstand berücksichtigt.) Die Gruppierung wiederum bestimmt den Detaillierungsgrad und damit den Bedarf an Speicherkapazität und Rechenleistung. Durch die Konzentration auf die oben genannten Merkmale lassen sich Reparaturkosten, Ersatzteilkompatibilitäten und anderes mit hoher Präzision bestimmen, so dass auch mit einem handelsüblichen Personal Computer eine anwendungsübergreifende Bestimmung von charakteristischen Eigenschaften eines individuellen Kraftfahrzeugs möglich ist.

Die genannte Aufgabe ist daher vollständig gelöst.

In einer bevorzugten Ausgestaltung variiert der Kraftfahrzeugidentifikationsschlüssel ferner in Abhängigkeit von einer Ausstattungslinie des individuellen Kraftfahrzeugs.

Ausstattungslinien werden von manchen, jedoch nicht von allen Kraftfahrzeugherstellern verwendet. Sie definieren einen bestimmten Umfang an Ausstattungsmerkmalen, der neben reinen Komfortmerkmalen zum Teil auch technische Eigenschaften, wie beispielsweise ein härter abgestimmtes Fahrwerk, beinhalten kann. Sofern vorhanden, führt die Berücksichtigung der Ausstattungslinien bei vergleichsweise geringem zusätzlichem Speicher-und Verarbeitungsbedarf zu einer noch höheren Präzisierung. In einer besonders bevorzugten Ausgestaltung der Erfindung erfolgt die Gruppierung genau anhand der bislang angegebenen Kriterien, d.h. es werden keine weiteren Unterscheidungskriterien über die bislang genannten Kriterien hinaus herangezogen. Der Gruppierung entsprechend variiert dann auch der Kraftfahrzeugidentifikationsschlüssel genau in Abhängigkeit von den Kriterien Kraftfahrzeugart, Kraftfahrzeughersteller, Kraftfahrzeugbaureihe, Karosseriebauform, Motorvariante, Getriebevariante und, sofern vorhanden, Ausstattungslinie. Mit Hilfe dieser Merkmale lässt sich eine optimale Ausnutzung typischerweise vorhandener Speicherkapazitäten bei hoher Präzisierung der Abfrageergebnisse erreichen.

In einer weiteren Ausgestaltung wird der Kraftfahrzeugidentifikationsschlüssel anhand einer sequentiellen Auflistung aller in der Datenbank erfassten Gruppen von Kraftfahrzeugen gebildet. Besonders bevorzugt ist es dabei, wenn der Kraftfahrzeugidentifikationsschlüssel von einem weltweit einzigen Schlüsselvergaberechner erzeugt wird. Dementsprechend beinhaltet eine bevorzugte Ausgestaltung der neuen Vorrichtung einen zentralen Schlüsselvergaberechner mit einem zweiten Speicher, in dem eine sequentielle Auflistung aller in der Datenbank erfassten Gruppen von Kraftfahrzeugen gespeichert ist, und zwar vorzugsweise redundanzfrei, wobei der Schlüsselvergaberechner dazu ausgebildet ist, den Kraftfahrzeugidentifikationsschlüssel anhand der sequentiellen Auflistung zu erzeugen.

Eine sequentielle Auflistung in diesem Sinne bedeutet, dass alle bekannten Kombinationen von Motorvariante, Karosseriebauform, Getriebevariante und gegebenenfalls Ausstattungslinie zu einer Kraftfahrzeugbaureihe eines Kraftfahrzeugherstellers aufeinanderfolgend gelistet und anschließend durchnummeriert werden. Die sequentielle Nummer einer bestimmten Kombination wird dann Bestandteil des neuen Kraftfahrzeugidentifikationsschlüssels. Diese Art der Erzeugung des Kraftfahrzeugidentifikationsschlüssels ist besonders bevorzugt, weil damit zukünftige Kraftfahrzeugvarianten ohne Weiteres in das System aufgenommen werden können, ohne dass dazu in den Abfragevorrichtungen unnötig großer "Leerspeicher" bereitgehalten werden muss. Der erforderliche Speicherbedarf kann ohne Beschränkung der Erweiterbarkeit der Datenbank reduziert werden. Zudem ist diese Art der Erzeugung des Kraftfahrzeugidentifikationsschlüssels sehr einfach, so dass trotz enormer Datenmengen ein kostengünstiger Schlüsselvergaberechner verwendet werden kann.

Die bevorzugte Verwendung eines weltweit einzigen Schlüsselvergaberechners ist eine technisch sehr einfache und kostengünstige Möglichkeit, um Mehrdeutigkeiten zu verhindern. Alternativ hierzu wäre grundsätzlich auch eine dezentrale Erzeugung des Kraftfahrzeugidentifikationsschlüssels möglich, wobei dann ein zusätzlicher technischer Aufwand betrieben werden müsste, um die Eindeutigkeit des Kraftfahrzeugidentifikationsschlüssels zu gewährleisten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

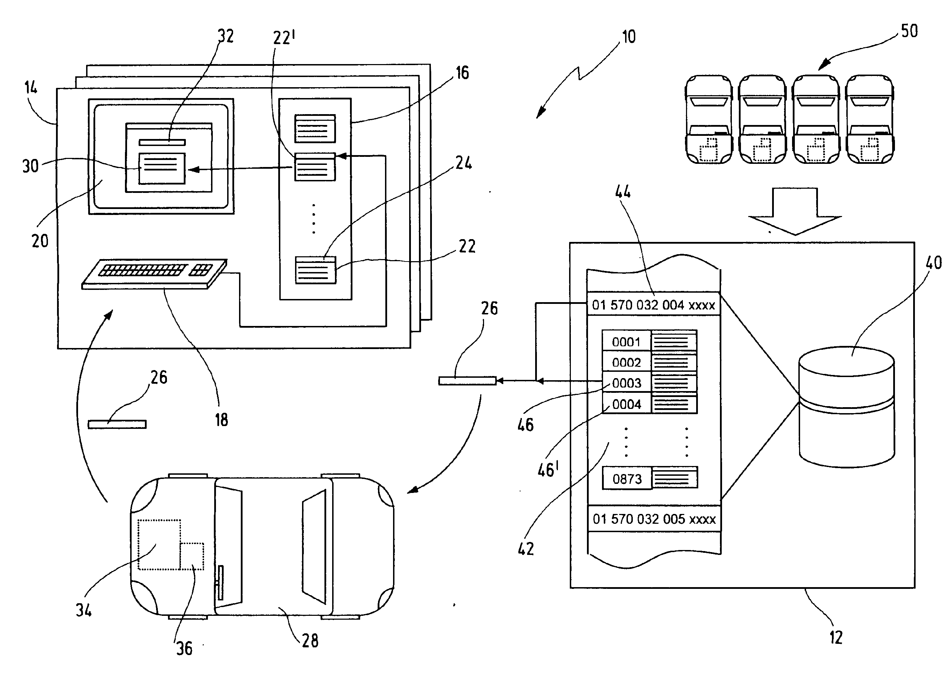

In der einzigen Figur ist ein bevorzugtes Ausführungsbeispiel der Erfindung schematisch dargestellt.

Eine erfindungsgemäße Vorrichtung ist darin in ihrer Gesamtheit mit der Bezugsziffer 10 bezeichnet. Sie beinhaltet einen zentralen Schlüsselvergaberechner 12 und eine Vielzahl von dezentralen Abfrageeinheiten 14. Die Abfrageeinheiten 14 besitzen jeweils zumindest einen Speicher 16, eine Eingabeeinheit 18 und eine Ausgabeeinheit 20. In einer bevorzugten Realisierung sind die Abfrageeinheiten 14 handelsübliche Personal Computer, die Eingabeeinheit 18 ist eine Tastatur und/oder Maus und die Ausgabeeinheit 20 ein Monitor. Die Erfindung ist hierauf jedoch nicht beschränkt. Beispielsweise könnte die Eingabeeinheit auch ein Barcodeleser, ein Scanner oder ein anderes Eingabemedium für einen Rechner sein. Die Ausgabeeinheit 20 könnte auch ein Drucker, ein Plotter, eine akustische Ausgabe oder ein beliebiges anderes Ausgabemedium sein.

Im Speicher 16 ist eine Datenbank abgespeichert, in der eine Vielzahl von Datensätzen enthalten sind. Die Datensätze sind (zumindest logisch) in Gruppen 22 geordnet, wobei jede Gruppe 22 ein eindeutiges Gruppenkennzeichen 24 besitzt. Jede Gruppe 22 enthält Informationen zu charakteristischen Eigenschaften von jeweils typgleichen Kraftfahrzeugen.

Wird mit Hilfe der Eingabeeinheit 18 ein Kraftfahrzeugidentifikationsschlüssel 26, der einem Kraftfahrzeug 28 zugeordnet ist, in die Abfrageeinheit 14 eingegeben, sucht die Abfrageeinheit 14 diejenige Gruppe 22, deren Gruppenkennzeichen 24 dem Kraftfahrzeugidentifikationsschlüssel 26 entspricht. Die in der gefundenen Gruppe 22' hinterlegten charakteristischen Eigenschaften inklusive allgemeiner Typdaten werden dann in einer Maske 30 auf der Ausgabeeinheit 20 angezeigt. Außerdem wird in diesem Ausführungsbeispiel auch der eingegebene Kraftfahrzeugidentifikationsschlüssel 26 in einem Feld 32 angezeigt.

Erfindungsgemäß variiert der Kraftfahrzeugidentifikationsschlüssel 26 nicht nur in Abhängigkeit von der Kraftfahrzeugart (Pkw, Lkw, Motorrad, etc.), dem Kraftfahrzeughersteller (Volkswagen, Mercedes, Opel, Ford u.a.) und der Kraftfahrzeugbaureihe (Golf, E Klasse etc.), sondern auch in Abhängigkeit von der Karosseriebauform (Limousine, Cabrio, Coupé, Kombi u.a.), dem verwendeten Motor (Bezugsziffer 34), dem verwendeten Getriebe (Bezugsziffer 36) und, wenn herstellerseitig definiert, einer Ausstattungslinie. Beispielsweise lautet ein individueller Kraftfahrzeugidentifikationsschlüssel gemäß der vorliegenden Erfindung 01 570 032 004 0001 und ein anderer Kraftfahrzeugidentifikationsschlüssel 01 570 032 004 0002. Im konkreten Anwendungsfall verbirgt sich hinter diesen Kraftfahrzeugidentifikationsschlüsseln ein Pkw, was durch die ersten beiden Ziffern 01 gekennzeichnet ist. Die nächsten drei Ziffern 570 identifizieren den Kraftfahrzeughersteller bzw. die Kraftfahrzeugmarke, in diesem Fall beispielsweise Mercedes-Benz. Die nächsten drei Ziffern 032 bezeichnen die Kraftfahrzeugbaureihe, hier beispielsweise die Baureihe 211, d.h. ein Fahrzeug der so genannten E-Klasse. Die nächsten drei Ziffern 004 bezeichnen die Kraftfahrzeugbaureihe noch etwas detaillierter. Beispielsweise handelt es sich hier um einen Mercedes-Benz E 320.

In den letzten vier Stellen verbirgt sich gemäß einem besonders bevorzugten Ausführungsbeispiel der Erfindung eine Codierung, in die die Motorvariante, die Getriebevariante, die Karosseriebauform und, wenn vorhanden, die Ausstattungslinie, eingehen. Die letzten vier Ziffern 0001 des zuerst genannten Kraftfahrzeugidentifikationsschlüssels bezeichnen hier beispielsweise eine viertürige Limousine mit einem 3,2 1/150 kW Motor und einem Automatikgetriebe ohne nähere Spezifizierung einer Ausstattungslinie. Das gleiche Kraftfahrzeug, jedoch in der Ausstattungslinie "Elegance" besitzt demgegenüber die Endziffern 0002 und ein entsprechendes Fahrzeug in der Ausstattungslinie "Avantgarde" die Endziffern 0003. Eine andere Motorisierung, ein Handschaltgetriebe oder die Karosseriebauform "Kombi" führen grundsätzlich ebenfalls zu Veränderungen in Bezug auf die letzten vier Ziffern des Kraftfahrzeugidentifikationsschlüssels. Das Fahrzeug eines anderen Herstellers oder eine andere Modellbaureihe führen demgegenüber zu Veränderungen des Kraftfahrzeugidentifikationsschlüssels 26 in den vorderen Stellen. Im Einzelfall kann eine andere Motorisierung o. dgl. Jedoch auch an eine andere Modellbaureihe geknüpft sein, so dass sich in diesem Spezialfall eine Änderung in den letzten vier Ziffern erübrigt.

Die nach Eingabe des zugeordneten Kraftfahrzeugidentifikationsschlüssels 26 angezeigten Eigenschaften 30 können beliebiger Natur sein. Es kann sich beispielsweise um betriebswirtschaftliche Kenngrößen, wie etwa ein durchschnittlicher Gebrauchtwagenpreis, handeln. Darüber hinaus kann für das identifizierte Kraftfahrzeug eine detallierte Reparaturkostenkalkulation anhand der angezeigten Eigenschaften durchgeführt werden, und in einem bevorzugten Ausführungsbeispiel werden Ersatzteilkompatibilitäten angezeigt. Weitere Informationen können Reparaturanweisungen, Informationen zu technischen Modifikationen und anderes sein. Der in dem Speicher 16 benötigte Speicherbedarf ist trotz der hohen Detailtiefe begrenzt, da sich die genannten Informationen aufgrund der technischen Klassifizierung des Kraftfahrzeugs 28 für eine Vielzahl von typgleichen Kraftfahrzeugen zusammenfassen lassen.

Die Erzeugung des Kraftfahrzeugidentifikationsschlüssels 26 erfolgt in dem bevorzugten Ausführungsbeispiel mit Hilfe des zentralen Schlüsselvergaberechners 12. Dieser besitzt einen Speicher 40, in dem eine sequentielle Auflistung 42 aller für eine Kraftfahrzeugbaureihe eines Herstellers in Betracht kommenden Kombinationen von Karosseriebauform, Motorvariante, Getriebevariante und gegebenenfalls Ausstattungslinie gelistet sind. Der Schlüsselvergaberechner 12 erzeugt den Kraftfahrzeugidentifikationsschlüssel 26 aus den für Kraftfahrzeugart, Kraftfahrzeughersteller und Kraftfahrzeugbaureihe fest vergebenen Kennzahlen im Feld 44 und der sequentiellen Nummer der jeweiligen Merkmalskombination, die bei der Bezugsziffer 46 angegeben ist. Die sequentielle Nummer bildet die letzten vier Stellen des Kraftfahrzeugidentifikationsschlüssels 26 in diesem bevorzugten Ausführungsbeispiel. Dementsprechend variiert der Kraftfahrzeugidentifikationsschlüssel 26 abhängig von Kraftfahrzeugart, Kraftfahrzeughersteller, Kraftfahrzeugbaureihe sowie in Abhängigkeit von Karosseriebauform, Motorvariante, Getriebevariante und gegebenenfalls Ausstattungslinie. Weitere Merkmale, die ein individuelles Kraftfahrzeug 28 kennzeichnen können, wie beispielsweise Lackierung, Bereifung, Komfortelektronik und anderes, spielen für die Klassifizierung in dem bevorzugten Ausführungsbeispiel keine Rolle, was zu einer optimalen Reduzierung des Speicherplatzbedarfs bei den Abfrageeinheiten 14 führt.

Der zentrale Schlüsselvergaberechner 12 erzeugt für eine Vielzahl von Kraftfahrzeugen 50 eine Vielzahl von unterschiedlichen Kraftfahrzeugidentifikationsschlüsseln 26. Die erzeugten Kraftfahrzeugidentifikationsschlüssel 26 werden veröffentlicht. In einem bevorzugten Ausführungsbeispiel werden sie bereits vom Kraftfahrzeughersteller in den Kraftfahrzeugpapieren dokumentiert. Alternativ könnten sie auch am Kraftfahrzeug selbst, beispielsweise in maschinenlesbarer Form mittels eines Barcodes oder ähnlichem, angeordnet sein. Um die charakteristischen Eigenschaften des individuellen Kraftfahrzeugs 28 zu bestimmen, genügt es dann, den zugeordneten Kraftfahrzeugidentifikationsschlüssel 26 in die Abfrageeinheit 14 einzugeben. Die gesuchten Eigenschaften werden dann aus der Datenbank im Speicher 16 angezeigt.

## Patentansprüche

1. Verfahren zum Bestimmen von charakteristischen Eigenschaften eines individuellen Kraftfahrzeugs (28), das aus einer Vielzahl von möglichen Kraftfahrzeugen (50) ausgewählt wird, mit den Schritten:
- Bereitstellen einer, vorzugsweise elektronischen, Datenbank (16), in der für eine Vielzahl von Gruppen (22) von jeweils typgleichen Kraftfahrzeugen charakteristische Eigenschaften hinterlegt sind,
- Bereitstellen einer Vielzahl von Gruppenkennzeichen (24), wobei jeder Gruppe (22) in der Datenbank (16) ein Gruppenkennzeichen (24) eindeutig zugewiesen ist,
- Zuordnen eines bestimmten Kraftfahrzeugidentifikationsschlüssels (26) zu dem individuellen Kraftfahrzeug (28), und
- Abfragen der charakteristischen Eigenschaften, die in der Datenbank (16) zu derjenigen Gruppe (22) hinterlegt sind, deren Gruppenkennzeichen (24) dem Kraftfahrzeugidentifikationsschlüssel (26) entspricht,
**dadurch gekennzeichnet, dass** der Kraftfahrzeugidentifikationsschlüssel (26) in Abhängigkeit von einer Karosseriebauform, einer Motorvariante (34) und einer Getriebevariante (36) des individuellen Kraftfahrzeugs (28) variiert und dass die charakteristischen Eigenschaften jeweils zu Gruppen (22) von Kraftfahrzeugen hinterlegt sind, die in Bezug auf Kraftfahrzeugart, Kraftfahrzeughersteller, eine Kraftfahrzeugbaureihe sowie in Bezug auf Karosseriebauform, Motorvariante (34) und Getriebevariante (36) jeweils gleich sind.

2. Verfahren nach Anspruch 1, **dadurch gekennzeichnet, dass** der Kraftfahrzeugidentifikationsschlüssel (26) ferner in Abhängigkeit von einer Ausstattungslinie des individuellen Kraftfahrzeugs variiert.

3. Verfahren nach Anspruch 1 oder 2, **dadurch gekennzeichnet, dass** der Kraftfahrzeugidentifikationsschlüssel (26) anhand einer sequentiellen Auflistung (42) aller in der Datenbank erfassten Gruppen von Kraftfahrzeugen gebildet wird.

4. Verfahren nach einem der Ansprüche 1 bis 3, **dadurch gekennzeichnet, dass** der Kraftfahrzeugidentifikationsschlüssel (26) von einem weltweit einzigen Schlüsselvergaberechner (12) erzeugt wird.

5. Vorrichtung zum Bestimmen von charakteristischen Eigenschaften eines individuellen Kraftfahrzeugs (28) aus einer Vielzahl von möglichen Kraftfahrzeugen (50), mit:
- einem ersten Speicher (16), in dem eine vorzugsweise elektronische Datenbank abgespeichert ist, in der für eine Vielzahl von Gruppen (22) von jeweils typgleichen Kraftfahrzeugen charakteristische Eigenschaften hinterlegt sind, wobei jeder Gruppe (22) in der Datenbank ein Gruppenkennzeichen (24) eindeutig zugewiesen ist,
- einem Eingabemedium (18) zum Eingeben eines bestimmten Kraftfahrzeugidentifikationsschlüssels (26), der einem individuellen Kraftfahrzeug (28) zugeordnet ist, und
- einem Ausgabemedium (20), das die charakteristischen Eigenschaften (30) anzeigt, die in der Datenbank zu derjenigen Gruppe (22) hinterlegt sind, deren Gruppenkennzeichen (24) dem Kraftfahrzeugidentifikationsschlüssel (26) entspricht,
**dadurch gekennzeichnet, dass** der Kraftfahrzeugidentifikationsschlüssel (26) in Abhängigkeit von einer Karosseriebauform, einer Motorvariante (34) und einer Getriebevariante (36) des individuellen Kraftfahrzeugs (28) variiert und dass die charakteristischen Eigenschaften jeweils zu Gruppen von Kraftfahrzeugen hinterlegt sind, die in Bezug auf Kraftfahrzeugart, Kraftfahrzeughersteller, eine Kraftfahrzeugbaureihe sowie in Bezug auf Karosseriebauform, Motorvariante und Getriebevariante jeweils gleich sind.

6. Vorrichtung nach Anspruch 5, **dadurch gekennzeichnet, dass** der erste Speicher (16), das Eingabemedium (18) und das Ausgabemedium (20) zusammen eine dezentrale Abfrageeinheit (14) bilden und dass ferner ein zentraler Schlüsselvergaberechner (12) vorhanden ist, der dazu ausgebildet ist, den Kraftfahrzeugidentifikationsschlüssel (26) weltweit einmalig zu erzeugen.

7. Vorrichtung nach Anspruch 6, **dadurch gekennzeichnet, dass** der zentrale Schlüsselvergaberechner (12) einen zweiten Speicher (40) beinhaltet, in dem eine sequentielle Auflistung (42) aller in der Datenbank erfassten Gruppen von Kraftfahrzeugen gespeichert ist, wobei der Schlüsselvergaberechner (12) dazu ausgebildet ist, den Kraftfahrzeugidentifikationsschlüssel (26) anhand der sequentiellen Auflistung (42) zu erzeugen.

8. Computerprogrammprodukt mit einem Speichermedium, auf dem eine Datenbank abgespeichert ist, in der für eine Vielzahl von Gruppen (22) von jeweils typgleichen Kraftfahrzeugen charakteristische Eigenschaften hinterlegt sind, wobei jeder Gruppe (22) in der Datenbank ein Gruppenkennzeichen (24) eindeutig zugewiesen ist, und mit Programmcode, der dazu ausgebildet ist, ein Verfahren nach einem der Ansprüche 1 bis 4 durchzuführen, wenn der Programmcode auf einem Computer ausgeführt wird.
